# EUROPEAN PATENT SPECIFICATION

(11) **EP 1 522 782 B1**
(45) Date of publication and mention of the grant of the patent: **03.04.2013**
(21) Application number: 04254872.7
(22) Date of filing: 13.08.2004
(51) Int. Cl.: F16L 25/00, F16L 33/24

(54) **Assembly with pipe fitting and corrugated flexible pipe**
Anordnung mit Anschlussarmatur und Wellschlauch
Agencement avec raccord de tuyauterie et tuyau ondulé flexible

(30) Priority: 14.08.2003 GB 0319064
(43) Date of publication of application: 13.04.2005
(73) Proprietor: McALPINE & COMPANY LIMITED, Hillington Glasgow G52 4LF Scotland (GB)
(72) Inventor: McAlpine, James Edward, Glasgow G52 4LF (GB)
(74) Representative: Shanks, Andrew

(56) References cited:
- DE-A- 19 512 033
- DE-C- 19 602 887
- GB-A- 847 721

## Description

### FIELD OF THE INVENTION

The present invention relates to a flexible pipe assembly comprising a flexible pipe and a pipe fitting for coupling to the flexible pipe as known for example from document DE-A-195 12 033. The invention has particular utility as a plumbing fitting, for example as a waste pipe or vent pipe fitting.

### BACKGROUND OF THE INVENTION

Waste pipe assemblies for basins, baths, sinks, urinals, WCs and the like are conventionally formed of conjoined rigid plastic sections. A plumber will typically identify the appropriate selection of couplings, bends and straight pipe sections, which may be cut to an appropriate length, to form the assembly, and these are then coupled mechanically or using appropriate glue. However, flexible pipes are also available and in a range of situations a flexible pipe section, provided with appropriate end fittings, may be fitted far more easily, and more quickly, that an assembly of conventional rigid fittings.

Flexible plumbing pipe comes in a variety of forms, including pipe with a wave form or corrugated wall which may be flexed to create relatively shallow bends or curves. Other corrugated flexible pipe has a zigzag or v-shaped wall section which is more readily flexed, which may be axially extended or retracted, and which may be configured to retain deformation.

One disadvantage associated with such flexible pipe is the difficulty involved in sealing fittings to the ends of the pipe. As a result, end fittings must be factory fitted using presses and the like. Thus, manufacturers of plumbing products, including the present applicant, tend to produce a range of flexible pipe-based products and assemblies in selected lengths and provided with selected end fittings. When a plumber wishes to employ flexible pipe the plumber must therefore ensure that an appropriate flexible pipe-based product is available either by surveying the task beforehand, or by always carrying a number of flexible pipe-based products: unlike conventional rigid pipe, it is not possible for the plumber to cut and seal end fittings to flexible pipe on site.

It is among the objectives of the present invention to obviate or mitigate the difficulties associated with sealing fittings on flexible pipe.

### SUMMARY OF THE INVENTION

According to the present invention as defined by claim 1 there is provided a pipe fitting for coupling to a pipe having a corrugated wall, the pipe fitting comprising a tubular body defining a screw thread for engaging a pipe wall and a cylindrical axially extending seal portion for forming an interference fit with the pipe wall.

In use, the screw thread allows the pipe fitting to be advanced into or over the end of the pipe simply by rotating the fitting relative to the pipe, and bringing the seal portion into sealing engagement with the pipe wall. Surprisingly, it has been found that the provision of the screw thread allows the interference fit between the seal portion and the pipe wall to be created manually, rather than requiring application of a two or three tonne axial force by an appropriate press, as is currently required.

The screw thread is adapted to engage the inner wall of a pipe and the seal portion is adapted for engaging the inner wall of a pipe. Locating the thread and seal portion inside the pipe assists in supporting the pipe and in installation. If desired, elements of the fitting, or a separate collar or the like, may be adapted to extend over the exterior of the pipe, which may improve appearance. The fitting may thus also define an annulus in which the end of the pipe may be located, which annulus may accommodate a suitable sealant.

Preferably, the leading end of the screw thread is tapered or chamfered. This assists in providing an initial engagement between the thread and the pipe wall and in allowing the thread to travel along the pipe wall. The trailing end of the thread may be tapered or chamfered, to assist in removing the fitting from a pipe.

Preferably, the crest of the screw thread is radiused, to avoid damaging or weakening the pipe. However, it is desirable that the radius is relatively small, such that the thread will still bite into the pipe wall.

Preferably, the thread has a lead angle greater than the back angle. In one embodiment the lead angle is in the region of 35° and the back angle is 6°; other angles may of course be used.

One or more fittings may be provided in combination with a length of flexible pipe. The pipe is preferably of variable length, that is the pipe may be extended or retracted. This offers the significant advantage of allowing a length of pipe provided in combination with one or two fittings to be fitted relatively easily into an existing plumbing system, or some other form of pipe work, without requiring dismantling or disassembly of the existing system.

Preferably, the thread root diameter is sized to avoid contact with the pipe wall, so reducing friction between the fitting and the pipe.

The fitting may be formed of any appropriate material, including polymeric materials such as polypropylene, uPVC and ABS, or may be metallic.

The fitting may be provided in combination with an operator grip adapted to engage with the fitting and facilitate rotation of the fitting relative to the pipe. Such a grip may be particularly convenient for use in combination with fittings which are difficult to grip.

The fitting may include a shoulder to abut the end of the pipe, and a seal may be provided between the shoulder and the pipe end. Where a collar is present, the collar may be arranged to abut the shoulder.

### BRIEF DESCRIPTION OF THE DRAWINGS

These and other aspects of the present invention will now be described, by way of example, with reference to the accompanying drawings, in which:
Figures 1a and 1b are views of a fitting in accordance with an embodiment of the present invention;
Figures 2a and 2b are views of a fitting in accordance with another embodiment of the present invention;
Figures 3a and 3b are views of a fitting in accordance with a further embodiment of the present invention; and
Figures 4 to 9 illustrate the steps involved in forming a flexible pipe assembly in accordance with a still further embodiment of the invention.

### DETAILED DESCRIPTION OF THE DRAWINGS

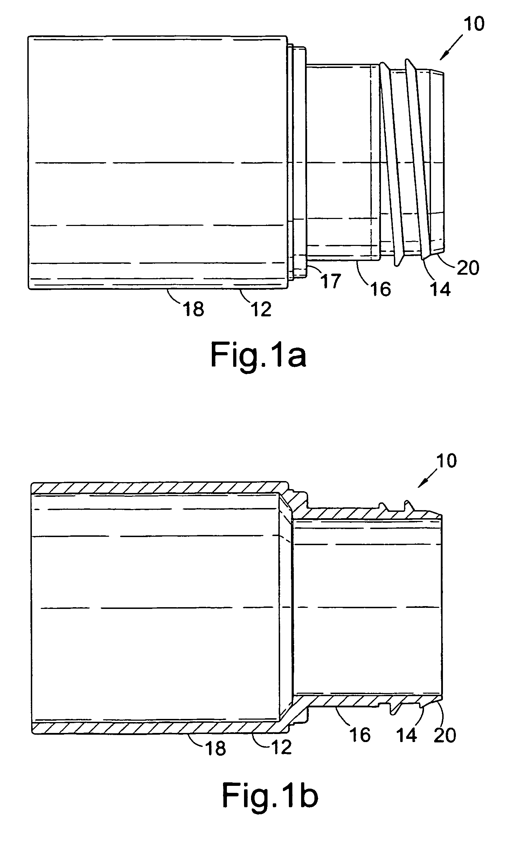

Reference is first made to Figures 1a and 1b of the drawings, which illustrate a pipe fitting 10 in accordance with a preferred embodiment of the present invention. The fitting 10 is intended to engage with the end of a length of flexible pipe (not shown) of the type disclosed, for example, in US Patent Nos 4,846,510 and 4,927,191, and UK Patent 2,298,470. The pipe is flexible, in that it may be flexed to create up to 180° bends, and may also be axially extended or contracted. The pipe wall is also configured such that deformation of the pipe tends to be retained.

In this example, the fitting 10 is intended for coupling to the end of a flexible pipe defining a minimum internal diameter of 38 mm, this minimum diameter being defined by the roots of the pipe wall corrugations.

The fitting 10 comprises a hollow tubular body 12 and has a leading end defining a screw thread 14 for engaging with an inner wall of a pipe. The screw thread is followed by a cylindrical seal portion 16, which is followed by a 50 mm diameter cylindrical coupling portion 18.

The screw thread 14 comprises a tapering nose portion 20 intended to facilitate location of the fitting within the pipe. The screw thread itself has a 5 mm pitch and has a root diameter less than the 38mm minimum internal diameter defined by the pipe corrugations. The maximum external diameter defined by the thread is 41.4 mm, the thread diameter being reduced towards the start and end of the thread to facilitate initial engagement of the thread of the pipe wall and to facilitate removal of the fitting from the pipe. That is, the start and end of the thread are 'blended' or tapered into the seal portion,

The lead angle of the thread is 35° and the back angle is 6°. In this example the fitting 10 has been moulded from plastics material and the mould is such that there are no sharp corners present on the screw thread 14, a small radius being used to break the thread crest. The presence of the various small radii assists in avoiding problems such as stress or cracking of the fitting 10, and also avoids damage to the flexible pipe by contact with the screw thread 14. However, it has been found that the effectiveness of the fitting 10 is enhanced if the radius on the crest of the screw thread 14 is relatively small, allowing the thread to bite into the wall of the flexible pipe.

The seal portion 16 follows directly after the screw thread 14 and in this example has an external diameter of 38.9 mm, that is 0.9 mm greater than the 38 mm internal diameter of the flexible pipe. Thus, the seal portion 16 will form an interference fit with the pipe. The seal portion 16 ends in a shoulder 17 which in use may abut the end of the pipe. A further seal, such as an elastomer seal or the like, may be provided on the shoulder 17.

The coupling portion 18 is intended for coupling to conventional 50 mm plumbing pipes or fittings.

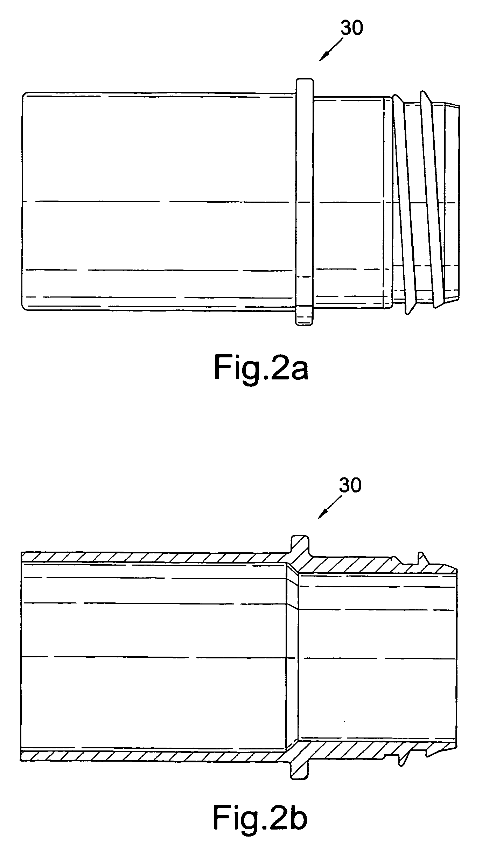

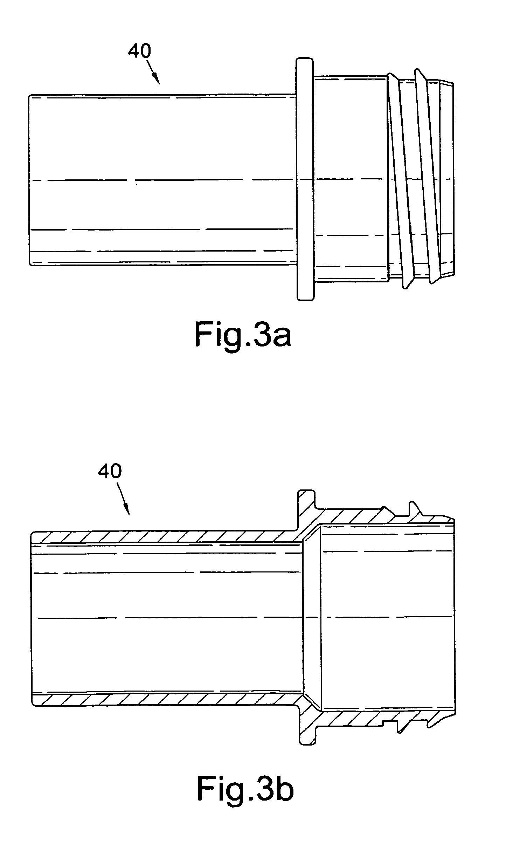

Figures 2a, 2b, 3a and 3b of the drawings are views of fittings 30, 40 of generally similar configuration to the fitting 10, but intended for coupling between flexible pipe and conventional fittings or pipe of 40 mm diameter and 32 mm diameter, respectively.

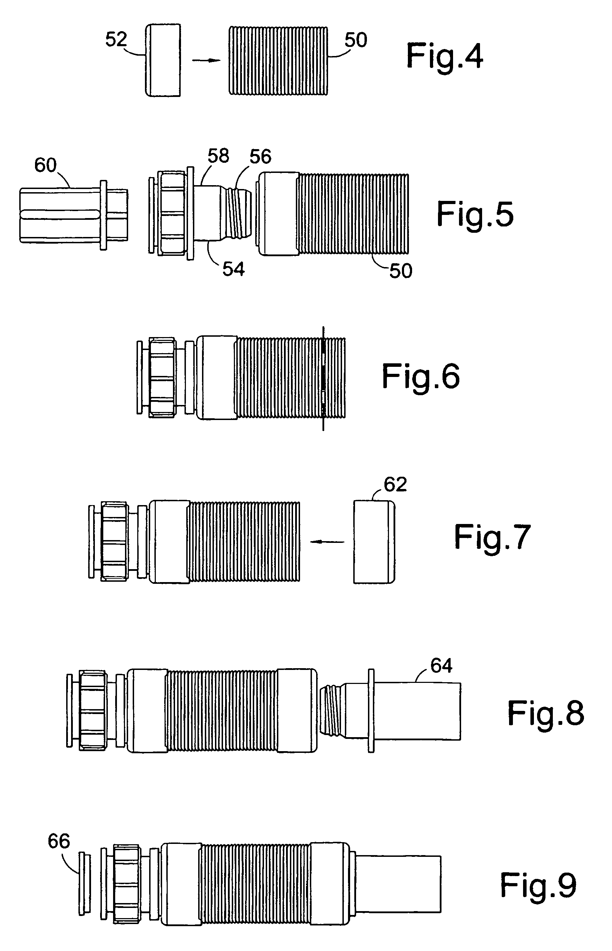

Reference is now made to Figures 4 through 9 of the drawings which illustrate the steps involved in forming a flexible pipe assembly utilising a fitting in accordance with a preferred embodiment of the present invention.

As noted above, it is among the objectives of the invention to provide fittings which may be coupled with flexible pipe to form a seal without requiring the provision of specialised heavy apparatus such as presses and the like. This allows a plumber to create flexible pipe assemblies of any appropriate length, and to suit the requirements of a particular job. The plumber may also select the appropriate form of end fittings. This contrasts with the situation at present, in which the flexible pipe assemblies must be factory assembled and thus tend to only be available in a restricted range of configurations.

Referring first to Figure 4, this shows a length of flexible pipe 50 over which a finishing collar 52 is first fitted, the collar 52 serving to provide the finished assembly with a more attractive appearance. As illustrated in Figure 5, a first pipe fitting 54 is then screwed into the end of the pipe 50. The fitting screw thread 56 engages with the inner wall of the pipe and as the fitting 54 is rotated relative to the pipe 50, the screw thread 56 pulls the following seal portion 58 into the pipe 50 to create an interference fit with the pipe 50 and the seal portion 58. To facilitate rotation of the fitting 54 relative to the pipe 50, a user grip 60 is provided and may be engaged with the fitting 54 to allow a user to apply the necessary torque to the fitting 54.

Once the fitting 54 is engaged with the pipe 50, the pipe 50 may be cut to the appropriate length, as illustrated in Figure 6. A second collar 62 is then located on the cut end of the pipe 50, as illustrated in Figure 7, and the second fitting 64 screwed into the cut end of the pipe, as illustrated in Figure 8. In this particular example, an inlet seal 66 is then located in the free end of the first fitting 54 (see Figure 9).

If it is necessary, it is possible to remove the fittings 54, 64 from the pipe 50 by unscrewing and pulling the fittings from the pipe.

It will be apparent to those of skill in the art that the above-described embodiments are exemplary of the present invention, and that various modifications and improvements may be made thereto without departing from the scope of the invention as defined by the following claims.

## Claims

1. A flexible pipe assembly comprising:
a flexible pipe (50) having a corrugated wall and defining a minimum internal diameter, and
a pipe fitting (10) comprising a tubular body defining a screw thread (14) for engaging an inner surface of the pipe wall and an axially extending seal portion (16) for forming an interference fit with the inner surface of the pipe wall, a seal, in use, being formed between the seal portion and the pipe wall;
**characterised in that** the axially extending seal portion (16) is cylindrical and is of a diameter which is greater than the minimum internal diameter of the pipe and which is less than the maximum diameter of the screw thread and greater than the diameter of the screw thread root.

2. The assembly of any preceding claim, comprising a portion (52) adapted to extend over the exterior of a pipe (50).

3. The assembly of claim 2, wherein the tubular body and said portion (52) define an annulus for receiving an end of a pipe.

4. The assembly of claim 3, wherein the annulus is adapted to accommodate a suitable sealant.

5. The assembly of any of the preceding claims, wherein a leading end of the screw thread (14) is tapered.

6. The assembly of any of the preceding claims, wherein a trailing end of the thread (14) is tapered.

7. The assembly of any of the preceding claims, wherein the screw thread (14) has a radiused crest.

8. The assembly of any of the preceding claims, wherein the thread (14) has a lead angle greater than the back angle.

9. The assembly of claim 8, wherein the lead angle is in the region of 35° and the back angle is 6°.

10. The assembly of any of the preceding claims, wherein the pipe (50) is of variable length.

11. The assembly of any of the preceding claims, wherein the thread root diameter is sized to avoid contact with the pipe wall.

12. The assembly of any of the preceding claims, in combination with an operator grip adapted to engage with the fitting (10) and facilitate rotation of the fitting relative to the pipe.

13. The assembly of any of the preceding claims, including a shoulder (17) adapted to abut a end of the pipe.

14. The assembly of claim 13, further including a seal member for location between the shoulder (17) and the pipe end.

## Patentansprüche

1. Flexible Rohrbaugruppe, die Folgendes umfasst:
ein flexibles Rohr (50), das eine gewellte Wand hat und einen minimalen Innendurchmesser definiert, und
einen Rohranschluss (10), der einen röhrenförmigen Korpus, der ein Schraubengewinde (14) zum Ineingriffnehmen einer Innenfläche der Rohrwand und einen sich in Axialrichtung erstreckenden Dichtungsabschnitt (16) zum Bilden einer Presspassung mit der Innenfläche der Rohrwand umfasst, wobei, bei Anwendung, eine Dichtung zwischen dem Dichtungsabschnitt und der Rohrwand gebildet wird,
**dadurch gekennzeichnet, dass** der sich in Axialrichtung erstreckende Dichtungsabschnitt (14) zylindrisch ist und einen Durchmesser hat, der größer ist als der minimale Innendurchmesser des Rohres und der geringer ist als der maximale Durchmesser des Schraubengewindes und größer als der Durchmesser des Schraubengewindefußes.

2. Baugruppe nach einem der vorhergehenden Ansprüche, die einen Abschnitt (52) umfasst, der dafür eingerichtet ist, sich über das Äußere des Rohres (50) zu erstrecken.

3. Baugruppe nach Anspruch 2, wobei der röhrenförmige Korpus und der Abschnitt (52) einen Ringspalt zum Aufnehmen eines Endes eines Rohres bilden.

4. Baugruppe nach Anspruch 3, wobei der Ringspalt dafür eingerichtet ist, eine geeignete Dichtungsmasse aufzunehmen.

5. Baugruppe nach einem der vorhergehenden Ansprüche, wobei ein vorderes Ende des Schraubengewindes (14) verjüngt ist.

6. Baugruppe nach einem der vorhergehenden Ansprüche, wobei ein hinteres Ende des Schraubengewindes (14) verjüngt ist.

7. Baugruppe nach einem der vorhergehenden Ansprüche, wobei das Schraubengewinde (14) einen gerundeten Scheitel hat.

8. Baugruppe nach einem der vorhergehenden Ansprüche, wobei das Schraubengewinde (14) einen Anschnittwinkel hat, der größer ist als der Rückenwinkel.

9. Baugruppe nach Anspruch 8, wobei der Anschnittwinkel in dem Bereich von 35° liegt und der Rückenwinkel 6° beträgt.

10. Baugruppe nach einem der vorhergehenden Ansprüche, wobei das Rohr (50) eine veränderliche Länge hat.

11. Baugruppe nach einem der vorhergehenden Ansprüche, wobei der Durchmesser des Schraubengewindefußes dafür bemessen ist, eine Berührung mit der Rohrwand zu vermeiden.

12. Baugruppe nach einem der vorhergehenden Ansprüche, in Kombination mit einem Bedienergriff, der dafür eingerichtet ist, mit dem Anschluss (10) ineinanderzugreifen und eine Drehung des Anschlusses im Verhältnis zu dem Rohr zu erleichtern.

13. Baugruppe nach einem der vorhergehenden Ansprüche, die einen Absatz (17) einschließt, der dafür eingerichtet ist, an ein Ende des Rohres anzustoßen.

14. Baugruppe nach Anspruch 13, die ferner ein Dichtungselement zum Anordnen zwischen dem Absatz (17) und dem Rohrende einschließt.

## Revendications

1. Assemblage de tuyau flexible, comprenant :
un tuyau flexible (50), comportant une paroi ondulée et définissant un diamètre intérieur minimal ; et
un raccord de tuyau (10), comprenant un corps tubulaire définissant un filet de vis (14) destiné à s'engager dans une surface interne de la paroi du tuyau, et une partie d'étanchéité à extension axiale (16), pour former un ajustement serré avec la surface interne de la paroi du tuyau, un joint d'étanchéité étant formé en service entre la partie d'étanchéité et la paroi du tuyau ;
**caractérisé en ce que** la partie d'étanchéité à extension axiale (16) est cylindrique et a un diamètre supérieur au diamètre intérieur minimal du tuyau, inférieur au diamètre maximal du filet de vis et supérieur au diamètre du fond du filet de vis.

2. Assemblage selon l'une quelconque des revendications précédentes, comprenant une partie (52) adaptée pour s'étendre au-dessus de l'extérieur d'un tuyau (50).

3. Assemblage selon la revendication 2, dans lequel le corps tubulaire et ladite partie (52) définissent un espace annulaire pour recevoir une extrémité d'un tuyau.

4. Assemblage selon la revendication 3, dans lequel l'espace annulaire est adapté pour recevoir un produit d'étanchéité approprié.

5. Assemblage selon l'une quelconque des revendications précédentes, dans lequel une extrémité avant du filet de vis (14) est effilée.

6. Assemblage selon l'une quelconque des revendications précédentes, dans lequel une extrémité arrière du filet de vis (14) est effilée.

7. Assemblage selon l'une quelconque des revendications précédentes, dans lequel le filet de vis (14) comporte un sommet de filet arrondi.

8. Assemblage selon l'une quelconque des revendications précédentes, dans lequel le filet de vis (14) a un angle d'avance plus grand que l'angle arrière.

9. Assemblage selon la revendication 8, dans lequel l'angle d'avance est compris dans la région de 35°, l'angle arrière correspondant à 6°.

10. Assemblage selon l'une quelconque des revendications précédentes, dans lequel le tuyau (50) a une longueur variable.

11. Assemblage selon l'une quelconque des revendications précédentes, dans lequel le diamètre du fond du filet est dimensionné de sorte à empêcher un contact avec la paroi du tuyau.

12. Assemblage selon l'une quelconque des revendications précédentes, en combinaison avec un moyen de préhension pour un opérateur, adapté pour s'engager dans le raccord (10) et faciliter la rotation du raccord par rapport au tuyau.

13. Assemblage selon l'une quelconque des revendications précédentes, englobant un épaulement (17) adapté pour buter contre une extrémité du tuyau.

14. Assemblage selon la revendication 13, englobant en outre un élément d'étanchéité destiné à être agencé entre l'épaulement (17) et l'extrémité du tuyau.
